# EUROPEAN PATENT APPLICATION

(11) **EP 1 648 172 A1**
(43) Date of publication of application: **19.04.2006**
(21) Application number: 05000567.7
(22) Date of filing: 13.01.2005
(51) Int. Cl.: H04N 7/24

(54) **System and method for embedding multimedia editing information in a multimedia bitstream**

(30) Priority: 12.10.2004 US 962637
(71) Applicant: CyberLink Corp., Shindian City, Taipei (TW)
(72) Inventor: Huang, Jau Hsiung, Shindian City, Taipei 231 (TW); Huang, Ho Chao, Shindian City, Taipei 231 (TW); Huang, Chen Hsiu,, Chi-Lung 202 (TW)
(74) Representative: Rehberg Hüppe + Partner

(57) **Abstract**

Systems and methods for embedding multimedia editing information in a multimedia bitstream to form a hybrid multimedia bitstream having data representing multimedia editing information as well data representing a multimedia signal. The embedded multimedia editing information may be extracted from the multimedia bitstream by an executable module to assist in processing, playing, or editing the multimedia bitstream.

## Description

### TECHNICAL FIELD

The present invention relates to systems and methods for processing multimedia bitstreams and, more specifically, relates to systems and methods for embedding multimedia editing informafion in, extracting multimedia editing information from, a multimedia bitstream.

### BACKGROUND OF THE INVENTION

Processing, analyzing, and editing multimedia content, at one time, was thought of as a task only performed by professional studios. However, advances in computing hardware and the technology used for editing audio and video has opened the door to non-professionals as well.

For example, a home movie may be recorded using a personal camcorder and transferred to a personal computer for processing, editing, or long-term storage. Digital camcorders, for example, record audio, video, and other information related to the home movie in digital form, such as on tape, computer memory, or a mass storage medium. The home movie may then be transferred to a personal computer using any number of interfaces, and then stored as a digital stream such as multimedia file in a number of common formats such as MPEG-1, MPEG-2, or DV, for example.

In many cases, the raw multimedia content in the home movie may require editing to produce an entertaining and polished appearance to a viewer. The frequency that home video clips are viewed often relates to the length of the video clip. That is, the shorter the video, the longer a viewer may stay interested in the content, and the greater the chance of repeated viewings. Video clips of less than 5 minutes are often ideal, and clips of over an hour may potentially never be fully reviewed. Furthermore, viewers are typically far less interested in video without scenario information, voice-overs, and music. Thus, it is sometimes necessary to edit long portions of raw video footage into smaller, more interesting portions. This editing process may also include adding scenario information, voice-overs, and music associated with the video.

Digital capture devices, such as those using the DV (digital video) standard, are now affordable for many consumers. However, many consumers have realized that it is interesting, and sometimes fun, to shoot video, but frustrating and extremely time consuming to edit the video into a program pleasurable to view. Furthermore, the software tools used by amateurs and other home users is typically very limited.
Often, the editing process is slowed because of the complexity of the algorithms needed to analyze or process the multimedia to perform the editing. In addition, the multimedia bitstreams may be relatively large and complex.

Conventional multimedia editing software presents the user with tools used for manual editing, but these tools are often very complex, time-consuming and difficult to learn. Thus, in addition to conventional multimedia editing, techniques for automatically editing video have been commercialized such that raw video footage may be edited with minimal human interaction. For example, such a system is available in the AutoProducer^{™} software available from muvee Technologies Pte. Ltd. Automatic editing software may, for example, produce a finished, or nearly finished video presentation based on user supplied parameters, raw video (supplied in a multimedia bitstream), and music. Automatic editing software may analyze raw video footage and audio files supplied by the user for various characteristics of the multimedia content contained therein. The results of this analysis, which represent the characteristics of the multimedia content, may then be used to edit the raw footage to create a produced multimedia presentation.

The analysis performed for editing multimedia, whether using conventional or automatic editing, is typically completed in a vacuum, without the consideration of prior processing or analysis that may have been performed on the multimedia bitstream. Thus, in a subsequent analysis of the multimedia bitstream for characteristics useful for multimedia editing, the multimedia bitstream is completely re-analyzed without consideration of the prior analysis. Additionally, if the multimedia bitstream is analyzed for other purposes, such as in preparation for compressing the multimedia bitstream, the analysis is performed without regard to the prior multimedia editing analysis. This may be true even though the same type of analysis (e.g. motion detection, *etc*.) was performed previously when determining the multimedia editing information.

Additionally, if the multimedia bitstream is passed to another user or analyzed using different software, as is common, the information from any prior analysis is lost. Thus, any analysis of the multimedia bitstream already performed is repeated. This repeated reanalysis of the multimedia bitstream can be very time consuming and wasteful of computing and personnel resources.

### SUMMARY

The present invention is directed to systems and methods for embedding multimedia editing information in, and extracting multimedia editing information from, a multimedia bitstream.

One embodiment is directed to a method for processing a multimedia bitstream. The method includes analyzing a multimedia bitstream for characteristics of a multimedia signal useful for editing the multimedia content within the multimedia bitstream; generating multimedia editing information based on the characteristics of the multimedia signal useful for editing the multimedia content; and embedding the multimedia editing information into the multimedia bitstream to produce a hybrid multimedia data stream.

Another embodiment is directed towards a method for processing a multimedia bitstream. The method includes embedding multimedia editing information within the multimedia bitstream, the multimedia editing information signifying characteristics of a multimedia signal useful for editing multimedia content within the multimedia bitstream.

Another embodiment is directed to a computer readable medium having a computer program for processing a multimedia bitstream. The computer readable medium includes a code segment for embedding multimedia editing information within the multimedia bitstream, the multimedia editing information signifying characteristics of a multimedia signal useful for editing multimedia content within the multimedia bitstream.

Another embodiment is directed towards a system for processing a multimedia bitstream. The system includes an executable module for embedding multimedia editing information within a multimedia bitstream, the multimedia editing information signifying characteristics of a multimedia signal useful for editing multimedia content within the multimedia bitstream.

Yet another embodiment is directed to a system for processing a multimedia bitstream. The system includes an executable module configured to extract multimedia editing information from the multimedia bitstream, the multimedia bitstream having multimedia content representing a multimedia signal and the multimedia editing information embedded therein.

Another embodiment is directed towards a system for processing a multimedia bitstream. The system includes an executable module for extracting information determined from a prior analysis of the multimedia bitstream from the multimedia bitstream. The system further includes an executable module for determining multimedia editing information by using the extracted information from the prior analysis. The system may also include an executable module for embedding the multimedia editing information in the multimedia bitstream.

Other systems, methods, features and/or advantages will be or may become apparent to one with skill in the art upon examination of the following drawings and detailed description. It is intended that all such additional systems, methods, features and/or advantages be included within this description and be protected by the accompanying claims.

### BRIEF DESCRIPTION OF THE DRAWINGS

The components in the drawings are not necessarily to scale relative to each other. Like reference numerals designate corresponding parts throughout the several views.
FIG. 1 depicts an exemplary system for embedding multimedia editing information in, and extracting multimedia editing information from, a multimedia bitstream.
FIG. 2 depicts a block diagram of the exemplary computer system of FIG. 1, which includes executable modules for embedding multimedia editing information in, and extracting multimedia editing information from, a multimedia bitstream.
FIG. 3 depicts a block diagram of an embodiment of a system for determining the multimedia editing information to be embedded within a multimedia bitstream.
FIG. 4 depicts an exemplary system for embedding multimedia editing information within a multimedia bitstream.
FIG. 5 depicts a block diagram of an exemplary embodiment of a system for extracting multimedia editing information from a multimedia bitstream, and for embedding multimedia editing information in a multimedia bitstream.
FIG. 6 depicts an exemplary method for embedding multimedia editing information in a multimedia bitstream.
FIG. 7 depicts yet another exemplary method for embedding multimedia editing information in, and extracting multimedia editing information from, a multimedia bitstream.

### DETAILED DESCRIPTION

Embodiments of systems and methods for embedding multimedia editing information in, and extracting multimedia editing information from, a multimedia bitstream are described. Multimedia editing information generally refers to information that may be used by an executable module to edit a multimedia bitstream. For example, a multimedia bitstream having audio and/or video content may be analyzed by any number of algorithms which provide information which an executable module may use to edit the multimedia content. In some embodiments a user may supply the multimedia editing information through a user interface or file.

A multimedia bitstream may be, for example, any number of types of files, data streams, or digital broadcasts representing any combination of audio, video, data, text, pictures, *etc.* For example, multimedia streams may take the format of an MPEG-1 bitstream, an MPEG-2 bitstream, an MPEG-4 bitstream, an H.264 bitstream, a 3GPP bitstream, a 3GPP-2 bitstream, Standard-Definition Video (SD-Video) bitstream, a High-Definition Video (HD-Video) bitstream, a Digital Versatile Disc (DVD) multimedia bitstream, a Video Compact Disc (VCD) multimedia bitstream, a High-Definition Digital Versatile Disc (HD-DVD) multimedia bitstream, a Digital Television Video / High-definition Digital Television (DTV/HDTV) multimedia bitstream, an AVI bitstream, a digital video (DV) bitstream, a QuickTime (QT) file, Windows Media Audio (WMA) bitstream, a Windows Media Video (WMV) bitstream, an Advanced System Format (ASF) bitstream, or any number of other popular digital multimedia formats. The above exemplary data streams are merely examples, and it is intended that the system cover any type of multimedia bitstream in its broadest sense.

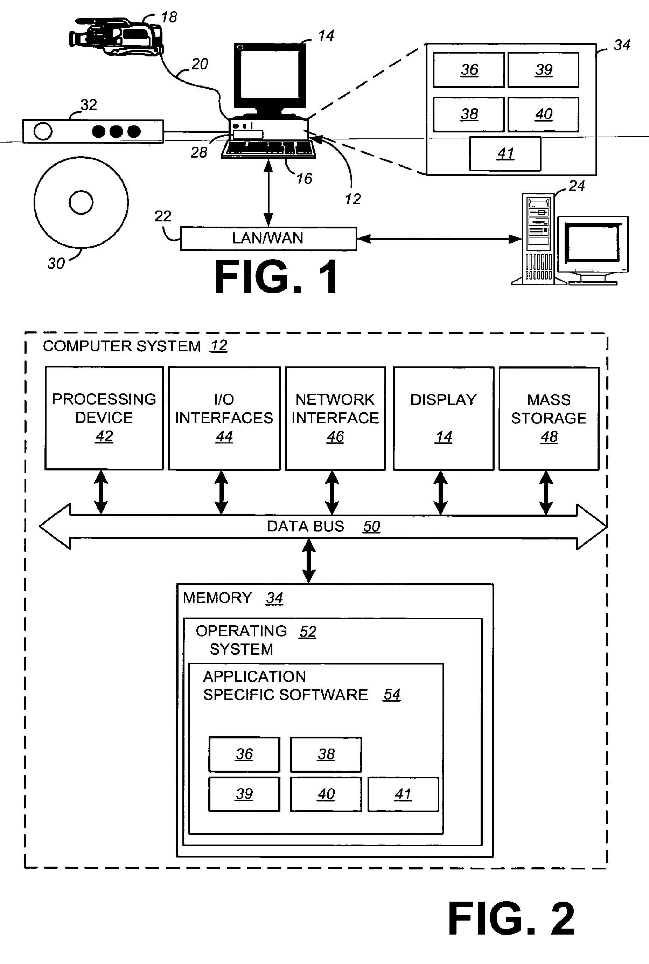

In accordance with certain aspects of a multimedia processing system, FIG. 1 depicts a system for embedding multimedia editing information in, and extracting multimedia editing information from, a multimedia bitstream. The system includes a computer system 12 having a display 14 and user input device 16, which may be a keyboard or a mouse, for example.

A video camera 18 may be coupled to computer system 12 via an electrical cable 20 or a wireless connection. Video camera 18 may, for example, be a digital camcorder which records multimedia content in a variety of digital formats. In this embodiment, electrical cable 20 may be any number of common computer interface cables, such as, but not limited to IEEE-1394 High Performance Serial Bus (Firewire), Universal Serial Bus (USB), a serial connection, or a parallel connection. In this embodiment, a digital multimedia stream may be transferred from video camera 18 to computer system 12 over electrical cable 20.

Computer system 12 may also form a node on a network 22 such as, but not limited to, a LAN or a WAN. In this configuration, multimedia bitstreams may be delivered from a remote server 24 over network 22 to computer system 12. The connection between the remote server 24 and computer system 12 may be any number of standard networking interfaces such as a CAT-5, Firewire, or wireless connection. Computer system 12 may also include optical drive 28 to receive and read optical disk 30, which may have multimedia bitstreams encoded thereon.

In some embodiments, a multimedia bitstream may be downloaded to the computer system 12 using multimedia input device 32 which may be a break-out box, or could be integrated onto an expansion card, either of which are electrically connected to computer system 12.

Multimedia input device 32 may include a variety of standard digital or analog input connections for receiving multimedia signals such as, but not limited to, RCA jacks, a microphone jack, Sony/Philips Digital Interface (S/PDIF) connections, optical connections, coaxial cable, and S-video connections. Multimedia input device 32 may include an analog-to-digital converter for converting analog multimedia to digital multimedia streams. In an embodiment in which multimedia input device 32 is a break-out box external to computer system 12, the box is electrically connected in an number of ways, for example, but not limited to, Firewire, USB, a serial connection, or a parallel connection.

Computer system 12 includes a memory 34, which may be used to store a number of executable modules therein. In some embodiments, any of a multimedia acquisition module 36, multimedia analyzing module 38, multimedia playback module 39, multimedia editing module 40, and multimedia processing module 41 may be stored therein. Memory 34 may include a number of other modules which, for example, could be sub-modules of multimedia acquisition module 36, multimedia analyzing module 38, multimedia playback module 39, multimedia editing module 40, and multimedia processing module 41.

In general, multimedia acquisition module 36 functions to acquire a multimedia bitstream. Multimedia acquisition module 36 may acquire a multimedia bitstream in a number of ways, depending on the source. For example, multimedia acquisition module 36 may coordinate the transfer of a multimedia bitstream from video camera 18, optical disc 28, remote server 24, or a mass storage device 48 (FIG. 2) to computer system 12. Multimedia acquisition module 36 also provides the multimedia bitstream to executable modules such as multimedia analyzing module 38, multimedia playback module 39, multimedia editing module 40, and multimedia processing module 41.

Multimedia analyzing module 38 performs the function of analyzing the audio and video content within a multimedia bitstream to determine information used for multimedia editing. Multimedia editing module 40 may perform a number of multimedia editing tasks which may be based on the information used for multimedia editing. Similarly, multimedia processing module 41 may perform multimedia processing tasks on the multimedia bitstream which may be based on the information used for multimedia editing. Accordingly, multimedia playback module 39, multimedia editing module 40, and multimedia processing module 41 may manipulate the multimedia bitstream based on multimedia editing information supplied by multimedia analyzing module 38.

In some embodiments, multimedia acquisition module 36, multimedia analyzing module 38, multimedia playback module 39, multimedia editing module 40, and multimedia processing module 41 may be combined into a single module that performs any combination of the tasks performed by each of the modules separately. Thus, any modules or submodules described herein are not limited to existing as separate modules. In reality all modules may operate apart from one another, or could easily be combined as one module. Additionally, it should be understood that each and every module is not essential to perform the systems and methods described herein.

In some embodiments, a user may interact and control the operation of any of multimedia acquisition module 36, multimedia analyzing module 38, multimedia playback module 39, multimedia editing module 40, and multimedia processing module 41 through user input device 16 and a graphical user interface within display 14.

Each of the executable modules, such as multimedia acquisition module 36, multimedia analyzing module 38, multimedia playback module 39, multimedia editing module 40, multimedia processing module 41, and any sub-modules may comprise an ordered listing of executable instructions for implementing logical functions. When the executable modules are implemented in software, it should be noted that the system can be stored on any computer-readable medium for use by, or in connection with, any computer-related system or method. In the context of this document, a computer-readable medium is an electronic, magnetic, optical, or other physical device or apparatus that can contain or store a computer program for use by or in connection with a computer-related system or method. The executable modules can be embodied in any computer-readable medium for use by, or in connection with, an instruction execution system, apparatus, or device, such as a computer-based system, processor-containing system, or other system that can fetch the instructions from the instruction execution system, apparatus, or device and execute the instructions.

In the context of this document, a "computer-readable medium" can be essentially anything that can store, communicate, propagate, or transport the program for use by or in connection with the instruction execution system, apparatus, or device. The computer readable medium can be, for example, but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via optical scanning of the paper or other medium, then compiled, interpreted or otherwise processed in a suitable manner if necessary, and then stored in a computer memory.

FIG. 2 is a block diagram illustrating an exemplary embodiment of computer system 12 on which multimedia acquisition module 36, multimedia analyzing module 38, multimedia playback module 39, multimedia editing module 40, and multimedia processing module 41 may be executed. Generally speaking, the computer system 12 can comprise any one of a wide variety of wired and/or wireless computing devices, such as a desktop computer, portable computer, dedicated server computer, multiprocessor computing device, cellular telephone, personal digital assistant (PDA), handheld or pen based computer, embedded appliance and so forth. Irrespective of its specific arrangement, computer system 12 can, for instance, comprise memory 34, a processing device 42, a number of input/output interfaces 44, a network interface device 46, and mass storage 48, wherein each of these devices are connected across a data bus 50.

Processing device 42 can include any custom made or commercially available processor, a central processing unit (CPU) or an auxiliary processor among several processors associated with the computer system 12, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 34 can include any one of a combination of volatile memory elements (e.g., random-access memory (RAM, such as DRAM, and SRAM, *etc.))* and nonvolatile memory elements (e.g., ROM, hard drive, tape, CDROM, *etc.).* The memory 34 typically comprises a native operating system 52, one or more native applications, emulation systems, or emulated applications for any of a variety of operating systems and/or emulated hardware platforms, emulated operating systems, *etc.* For example, the applications may include application specific software 54, which may include any of the multimedia acquisition module 36, multimedia analyzing module 38, multimedia playback module 39, multimedia editing module 40, and multimedia processing module 41. One of ordinary skill in the art will appreciate that memory 34 can, and typically will, comprise other components which have been omitted for purposes of brevity.

Input/output interfaces 44 provide any number of interfaces for the input and output of data. For example, where the computer system 12 comprises a personal computer, these components may interface with user input device 16, which may be a keyboard or a mouse. Where the computer system 12 comprises a handheld device (e.g., PDA, mobile telephone), these components may interface with function keys or buttons, a touch sensitive screen, a stylist, *etc.* Display 14 can comprise a computer monitor or a plasma screen for a PC or a liquid crystal display (LCD) on a hand held device, for example.

With further reference to FIG. 2, network interface device 46 comprises various components used to transmit and/or receive data over network 22. By way of example, the network interface device 46 may include a device that can communicate with both inputs and outputs, for instance, a modulator/demodulator *(e.g.,* a modem), wireless (e.g., radio frequency (RF)) transceiver, a telephonic interface, a bridge, a router, network card, *etc.)*

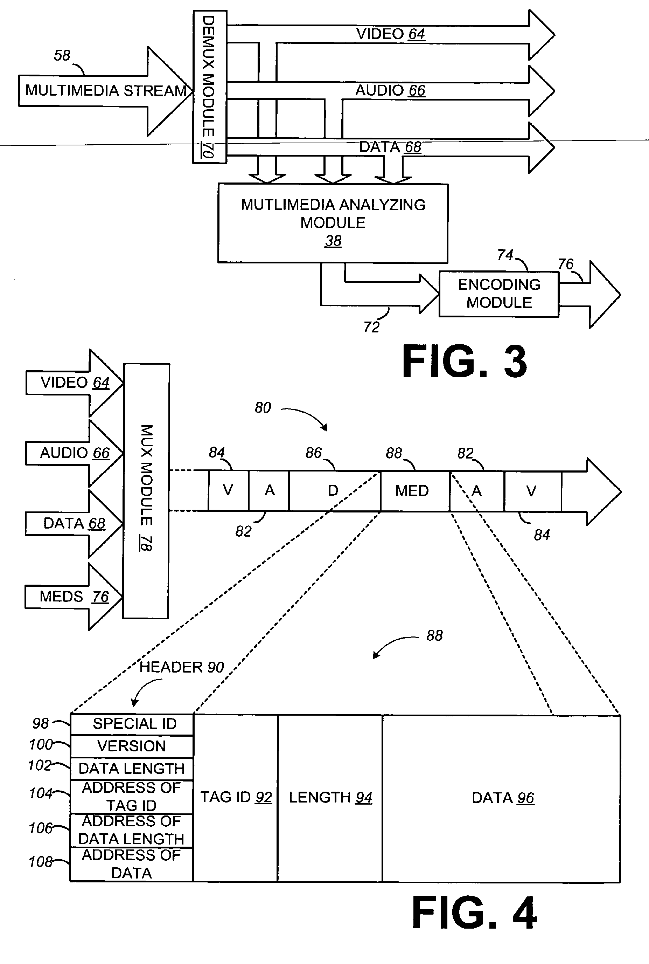

Referring to FIG. 3, an embodiment of a system for determining multimedia editing information to be embedded within a multimedia bitstream is described. In one embodiment, multimedia analyzing module 38 accepts a multimedia stream 58 as input and analyzes the multimedia bitstream 58 to determine characteristics of the multimedia stream useful to edit the multimedia bitstream. The analysis may be based upon either, or both of, the audio and video content within the multimedia bitstream 58.

For example, during editing, it may be helpful to determine various characteristics of the multimedia content that may indicate more "interesting" portions of the video. These portions may then be flagged for the user to incorporate into a video during the editing process, for automatic editing software to incorporate the portions into the product, or for determining particular portions of the multimedia content that may be used for a video thumbnail.

The video thumbnail may be associated with a portion of video and may used to represent, in a visual manner, the contents of a particular portion of multimedia content. For example, the video thumbnail may be displayed for a user to aid in the selection of a particular movie clip for insertion into the edited movie. In addition to using the video thumbnail for editing, the video thumbnail may be used for a variety of other purposes including representing clips of video in a DVD menu. The video thumbnail, for example, may be a single picture, or preferably a small portion of looping video. Using the analyses for detecting interesting portions of video, the portion of video to be used in the video thumbnail may also be automatically determined.

The analysis for determining multimedia editing information may include, but is not limited to, any of detecting characteristics of the audio (e.g. detecting applause, speech, music, noise, silence, or volume), detecting the complexity of video contents, detecting the amount of motion in the video, detecting panning in the video, detecting a scene change in the video, detecting commercial content in the video, detecting the video setting (e.g. recreational or memorial), detecting the heterogeneity of the video, detecting zooming in the video, detecting flashes of lights (e.g. camera flashes, fireworks, change in brightness between scenes, *etc.),* detection of faces in the video, detecting the luminance of a video segment, detecting the color variance of the video segment, and detecting whether a particular scene has been selected (e.g. manually or automatically) as an important scene.

In addition to editing information related to the multimedia bitstream having the raw video footage, if auxiliary audio content (e.g. a voiceover, background music, *etc.)* is to be added to the multimedia bitstream, the auxiliary audio content may be analyzed for information used to synchronize with video having similar characteristics. This auxiliary audio content, for example, may be in its own auxiliary audio multimedia bitstream such as a WAV, MP3, or WMA bitstream. For example, the analysis of the auxiliary audio may include, but is not limited to, any of determining characteristics of the audio (e.g. detecting applause, speech, music, noise, silence, tempo, or volume), detecting the audio bandwidth, detecting the number of times that the audio waveform crosses the zero axis in each frame, detecting the centroid of the frequency spectrum, and detecting the standard deviation of frequency spectrum.

The various analyses listed above are merely examples of those which may be performed to provide multimedia editing information in an automated fashion, and the embodiments of the systems and methods for embedding multimedia editing information into a multimedia bitstream are not limited to the particular type of analysis used.

Each of the analyses used may provide multimedia editing information which indicates characteristics of the multimedia bitstream useful for an executable module to edit the bitstream. For example, characteristics may include, but are not limited to, an indication of applause in audio associated with a segment of video, an indication of speech in audio associated with a segment of video, an indication of music in audio associated with a segment of video, an indication of noise in audio associated with a segment of video, an indication of silence in audio associated with a segment of video, an indication of the volume level of audio associated with a segment of video, the complexity of the video content, a level of motion associated with a segment of video, the location (directly or inherently) of scene changes or commercial content in the video, an indication of panning in a segment of video, an indication of zooming in a segment of video, an indication of faces or skin in a segment of video, an indication of the luminance in a segment of video, an indication of the color variance of a segment of video, an indication of the importance of a segment of video, an indication of light flashes in a segment of video, or an indication of brightness in a segment of video. The multimedia editing information may be embodied in a variety of formats and the systems and methods herein are not limited to any particular format or representation.

Additionally, the multimedia editing information may be represented as a change in the characteristics between two portions of video or audio content (e.g. an increase or decrease in motion, an increase or decrease in brightness, an increase or decrease in the number of faces detected in the video).

Multimedia editing information may also include the results of the analysis of any auxiliary audio content. For example, the multimedia editing information may include, but is not limited to, an indication of applause in the audio, an indication of speech in the audio, an indication of music in the audio, an indication of noise in the audio, an indication of silence in the audio, an indication of the volume level of the audio, an indication of the audio bandwidth, an indication of the number of times that the audio waveform crosses the zero axis in each frame, an indication of the centroid of the frequency spectrum of the audio content, and an indication of the standard deviation of the frequency spectrum. This information may be embedded within the multimedia bitstream having the raw video content. Additionally, in the case that the auxiliary audio content is embodied within its own auxiliary audio multimedia bitstream, the multimedia editing information may be embedded within the auxiliary audio multimedia bitstream.

While embodiments have been described in which multimedia analyzing module 38 analyzes the bitstream to determine information useful for multimedia editing using automated algorithms, in some embodiments the multimedia editing information may be supplied by the content provider or a viewer of the multimedia content. For example, an executable module such as multimedia analyzing module 38 or multimedia playback module 39 may be configured to provide a graphical user interface within display 14 (FIG. 1) to a viewer of the video content. Through the graphical user interface, the user may indicate (e.g. via a mouse, keyboard, or remote control) particular starting and ending positions in the video content that correspond to commercial content, high degrees of action, or other indicators which may be used by an executable module performing editing.

For example, if the editing module uses automatic editing, a user may be asked to profile the type of desired video output, and this profile information may also be embedded into the multimedia bitstream. The usage of profiles allows users to customize their videos according to the raw footage content properties and the users' preferences. For example, the preference may include settings such as sequential vs. non-sequential video and rhythmic vs. less-rhythmic video. If a sequential profile is used, the time sequence of shots will be preserved. If a non-sequential profile is used the original order of shots may be changed. When selecting a rhythmic profile, the music tempo/rhythm (e.g. to background music) is better preserved, but less shots may be shown. If using a less-rhythmic profile, the correspondence of music tempo/rhythm to the video is not as clear as using a rhythmic profile, but relatively more of the shots may be shown.

In some embodiments, the multimedia editing information may already be embedded in the multimedia bitstream or supplied in a separate file, signal, or bitstream, for example. This information may be decoded or extracted for use by executable modules just as if the multimedia editing information was determined by analysis of the bitstream.

Some embodiments may use a combination of automatic detection and manual indication of the multimedia editing information. For example, following the example above, multimedia analyzing module 38 may analyze the video content and make a best-guess as to the location of scene changes, high degrees of action, or other indicators which may be used by an executable module performing editing functions. This best-guess may then be formatted into a human readable format and displayed in the GUI for manual verification and adjustment by the a user. This multimedia editing information may then be fed to an executable module. Accordingly, while multimedia editing information may be acquired in any number of methods, of which only a few have been provided as examples, the described systems and methods for embedding multimedia editing information in, and extracting multimedia editing information from, a multimedia bitstream are not limited to any particular method.

Once the multimedia editing information is determined, the information may be used by an executable module, such as multimedia editing module 40, to edit the multimedia content. Additionally, information related to how the multimedia bitstream was edited may be embedded into the multimedia bitstream by multimedia analyzing module 38, or other executable modules.

It should be understood that although multimedia editing information is determined specifically for use by an executable module for performing multimedia editing, it should be understood that this information may also be used for any number of multimedia manipulation tasks.

Information, such as closed captioning and title information, are sometimes embedded within multimedia bitstreams in a variety of ways, depending on the particular format of the multimedia bitstream. It is contemplated that the multimedia editing information may be embedded in similar ways, and the systems and methods for embedding the multimedia editing information will vary depending on the format of the multimedia file.

The exemplary embodiment of FIG. 3 depicts a multimedia stream 58 in the MPEG-2 format, for example. The MPEG standard, known as ISO-13818-1, is capable of multiplexing multiple streams of multimedia content into a single stream. For example, each of a video stream 64, audio stream 66, and private data stream 68, may coexist within multimedia stream 58.

Video stream 64, audio stream 66, and private data stream 68 are known as "elementary streams." The MPEG standard allows for the combination of multiple elementary video, audio, or data streams into the same multimedia stream 58. Thus, for example, multimedia stream 58 may include an audio stream for the English language and a second audio stream for the Spanish language. Likewise, multiple video streams may be used. For example, a first video stream could represent video from one camera angle and a second video stream represents video from another angle. Private data stream 68, sometimes known simply as a data stream, is not limited to any single type of data. Data stream 68 may be used, for example, to provide an identification of multimedia stream 58 or may contain data to be decoded by a closed captioning device.

Multimedia analyzing module 38 may consider each of the audio, video, and data streams separately. Therefore, a demultiplexing system, herein DEMUX 70, may be provided to demultiplex, or separate, the elementary streams from multimedia stream 58. Here, multimedia stream 58 is passed into DEMUX 70 and video stream 64, audio stream 66, and private data stream 68 are provided as outputs to multimedia analyzing module 38.

Multimedia analyzing module 38 may analyze the multimedia bitstream to determine multimedia editing information. For example, the video and/or audio content in the bitstream may be analyzed to determine the multimedia editing information, as described in detail above. In addition to analyzing one, or both, of the audio and video streams, multimedia analyzing module 38 may read and analyze private data stream 68 to determine the multimedia editing information. For example, if data bitstream 68 includes closed captioning text, this text may be analyzed to determine the multimedia editing information.

Additionally, multimedia analyzing module 38 may determine if multimedia editing information has been previously embedded within any of the audio, video, or data bitstreams (e.g. within private data stream 68, for example). For example, if multimedia editing information has been previously embedded, multimedia analyzing module 38 may be configured to skip completely, or substantially reduce, further analysis of the multimedia bitstream by extracting the multimedia editing information directly.

Multimedia analyzing module 38 may also include error checking features, such as using a checksum or other identifying information, to determine if information embedded within the data stream corresponds to a particular version, is reliable information, and/or contains valid multimedia editing information.

Once multimedia analyzing module 38 has analyzed multimedia stream 58, multimedia analyzing module 38 may provide multimedia editing data 72 as its output. In the present embodiment, multimedia editing data 72 represents the multimedia editing information determined from analyzing the audio, video, and/or data bitstreams. Multimedia editing data 72 may be represented in a predetermined format, which may be used directly by other modules such as multimedia playback module 39, multimedia editing module 40, or multimedia processing module 41.

As depicted in FIG. 3, however, multimedia editing data 72 may also be passed through an encoding module 74 to convert the format of multimedia editing data 72 into a bitstream conforming to a variety of standard formats. In other embodiments, encoding module 74 may be integrated within multimedia analyzing module 38, rather than operating as a separate, stand-alone module.

In many cases, it is desirable for encoding module 74 to transform multimedia editing data 72 into a formatted data stream conforming to that required by a particular multimedia standard (e.g. MPEG-2, AVI, *etc.).* In the present embodiment, the predetermined format of multimedia editing data 72 is not one recognized as conforming to an MPEG-2 bitstream. Thus, encoding module 74 is used to convert the multimedia editing data 72 into an MPEG compliant elementary stream, such as formatted multimedia editing data stream 76 which may be a packetized elementary stream consisting of packetized elementary stream (PES) packets. Accordingly, the multimedia editing information, represented by multimedia editing data 72, is formatted into multimedia editing data stream 76.

FIG. 4 depicts an exemplary system for combining, or multiplexing, the multimedia editing data stream 76 into a hybrid multimedia stream. A multiplexing module, herein MUX 78, accepts inputs of video stream 64, audio stream 66, private data stream 68 as well as the formatted multimedia editing data stream 76 as output by encoding module 74 in FIG. 3. MUX 78 operates to multiplex, encode, or otherwise combine streams 64, 66, 68, and 76 into a single hybrid multimedia stream 80.

Hybrid multimedia stream 80 may then be stored as a file on any type of mass storage system such as a hard drive, floppy drive, optical drive, optical media, tape, *etc.* Alternatively, the file may be transmitted across a network to a remote host having a module configured to manipulate hybrid multimedia stream 80. For example, multimedia editing module 40, located within computer system 12, may be enabled to read hybrid multimedia stream 80 from the attached mass storage 48.

While the embodiment of FIG. 4 depicts data streams 68 and 76 as separate data streams, in some embodiments, the data within data streams 68 and 76 may be encoded into a single stream. For example, MUX 78, or other circuitry or software upstream of MUX 78, may combine private data stream 68 and formatted multimedia editing data stream 76 into a single data stream. Therefore, for example, title information data, closed captioning data, and multimedia editing data may coexist within the same elementary stream. Additionally, while the embodiment of FIG. 4 is depicted as existing separately, the system may be included as part of another executable module, such as, but not limited to, multimedia analyzing module 38, playback module 39, multimedia editing module 40, or multimedia processing module 41.

As defined herein, hybrid multimedia stream 80 includes data representing a multimedia signal as well as data representing multimedia editing information. A multimedia signal includes a video signal and/or an audio signal. The hybrid multimedia stream 80 may also include other types of elementary data streams such as, for example, data stream 68. Thus, while FIG. 4 depicts all four of video stream 64, audio stream 66, data stream 68, and formatted multimedia editing data stream 76, other embodiments of a hybrid data stream 80 may only contain formatted multimedia editing data stream 76 and any one of video stream 64 and/or audio stream 66, for example.

Exemplary hybrid multimedia stream 80 is comprised of a plurality of alternating audio data blocks 82, video data blocks 84, private data blocks 86, and multimedia editing data blocks 88. Audio data blocks 82 represent data from audio stream 66, and video data blocks 84 represent data from video stream 64. Likewise, private data block 86 represents data incorporated from private data stream 68 while multimedia editing data block 88 represents data originating from formatted multimedia editing data stream 76.

Audio data blocks 82, video data blocks 84, private data blocks 86, and multimedia editing data blocks 88 may be encoded in any format and is only limited by the particular standard employed (e.g. MPEG-2, MPEG-4, *etc.).* For example, the blocks may be in any sequence and each block may vary in size. Accordingly, for example, private data blocks 86 or multimedia editing data blocks 88 may be placed at the beginning, at the end, or intermittently throughout the hybrid multimedia stream 80.

FIG. 4 also depicts an exploded view of an exemplary multimedia editing data block 88 which may be embedded within the hybrid multimedia stream 80. Multimedia editing data block 88 may include fields, such as, but not limited to, a Header Field 90, a Tag ID field 92, a Length Field 94, and a Data Field 96. Multimedia editing data block 88 may be further encapsulated within a transport packet of a particular multimedia format. For example, multimedia editing data block 88 may be encapsulated within a packetized elementary stream (PES) packet, as defined by the MPEG-2 standard.

Header field 90 may include subfields useful for decoding and extracting the information from multimedia editing data block 88. Subfields may include, but are not limited to, the Special ID Subfield 98, Version Subfield 100, Length of the Data Subfield 102, Address of Tag ID Subfield 104, Address of Length Subfield 106, and Address of Data Subfield 108. The information in Header Field 90 may vary by application and the fields described herein are merely examples of one possible format.

The Special ID Subfield 98 may refer to identifying information that a decoder may use to identify multimedia editing data block 88 as a block containing multimedia editing data, rather than other types of data which may be stored within a particular data stream. Version Subfield 100 may include information which a decoder could use to determine the format version of the data encapsulated in multimedia editing data block 88. The Length of the Data Subfield 102 indicates the total length of Data Field 96. For example, the Length of Data Subfield 102 may indicate that Data Field 96 has a total length of 1024 bytes. The Address of Tag ID Subfield 104 indicates the position in data block 88 where the Tag ID field 92 is located. The Address of Data Length Subfield 106 indicates the position in the data block 88 where the Length Field 94 is located. The Address of Data Subfield 108 indicates the position in the data block where the Data Field 96 is located. For example, each of the Address of Tag ID Subfield 104, Address of Data Length Subfield 106, and the Address of Data Subfield 108 may contain a hexadecimal number referencing a specific memory location, or an offset from a predetermined memory location.

Tag ID Field 92 may identify an identifying tag for the multimedia editing information data. For example, Tag ID Field 92 may contain data identifying "motion" as equivalent to "tag 1," "scene change 1 starting position" as equivalent to "tag 2," and "scene change 1 ending position" as equivalent to "tag 3," and "zoom flag" as equivalent to "tag 4." The multimedia editing identifiers and their tags are not limited to those described above and will vary depending on the type of multimedia editing information to be embedded. Furthermore, the identifiers and tags are not limited to any particular order. The identifiers and their identifying tags may, for example, be any series of numbers or letters that can be decoded to identify the multimedia editing information in Data Field 96.

Data Field 96 may contain the actual multimedia editing data and the associated tag for each tag defined in the "Tag ID" field. For example, in the exemplary embodiment, the data corresponding to "zoom flag" may be found by searching sequentially, or otherwise, for the associated "tag 4" within the Data Field 96.

In one embodiment, to assist in searching for a particular tag and its associated data within Data Field 96, multimedia editing data block 88 may also include a Length of Data Field 94 which contains the length (e.g. the number of bits) of the multimedia editing information data associated with a particular tag within Data Field 96.

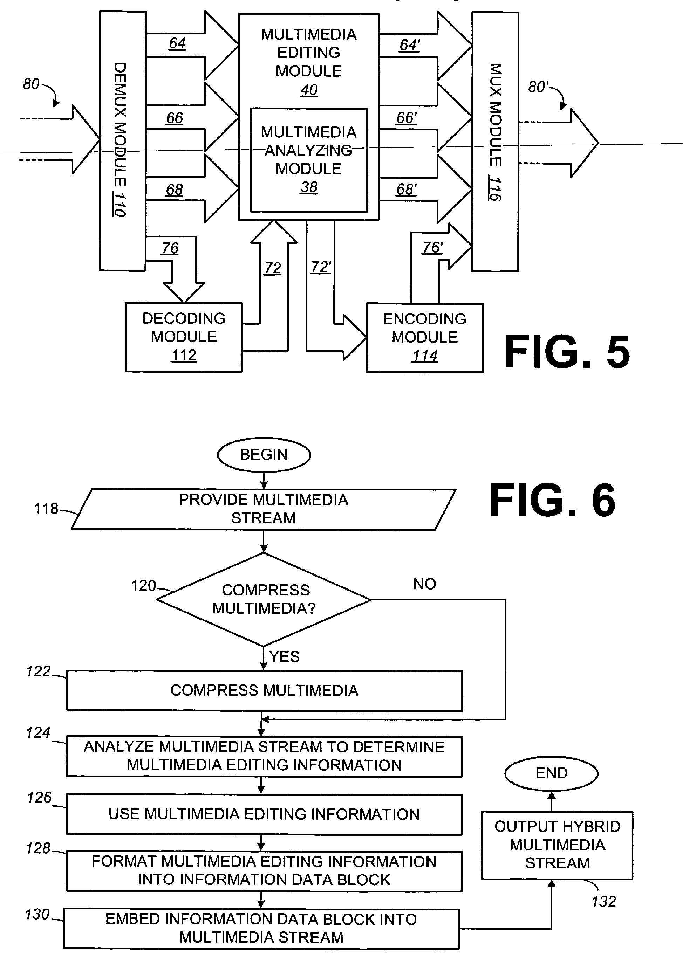

Referring to FIG. 5, another embodiment of a system for embedding multimedia editing information in, and extracting multimedia editing information from, a multimedia bitstream is depicted. The illustrated embodiment includes a demultiplexer, here in DEMUX 110 for demultiplexing, or separating, multimedia streams into elementary streams, a multimedia editing module 40, a multimedia analyzing module 38 for determining multimedia editing information, a decoding module 112 for converting data from a particular multimedia standard (e.g. MPEG-2, *etc.*) into a format recognizable to multimedia editing module 40, an encoding module 114 for converting data into a bitstream compliant to a particular multimedia standard, and a MUX 116 for multiplexing, or combining, each of the video stream 64', audio stream 66', private data stream 68', and formatted multimedia editing data stream 76' into hybrid multimedia stream 80'.

Multimedia analyzing module 38 is configured to operate substantially as described in relation to FIG. 3. In some embodiments, as in the embodiment of FIG. 5, multimedia analyzing module 38 may be integrated within other executable modules. For example, in FIG. 5, multimedia analyzing module 38 is integrated within multimedia editing module 40.

In general, multimedia editing module 40 performs multimedia editing tasks which may, in part, be based on the multimedia editing information embedded in the multimedia bitstream. As explained above, one example of information that may be used for multimedia editing is the position of commercial content in the video. Accordingly, during the process of editing video content, a user may command the multimedia editing module to automatically detect the commercial content in the multimedia content to assist in organizing the movie for editing. For example, multimedia editing module 40 may be configured to remove portions of the multimedia content corresponding to commercials or replace commercial content with other audio and/or video content. The multimedia editing module may split the multimedia bitstream into separate bitstreams defined by the commercial positions. Because the commercial positions may already be embedded within the multimedia bitstream, and this information may be extracted and used for the editing process, it may not be required to re-analyze the multimedia bitstream for this task.

Another example of multimedia editing information which may be embedded in the multimedia bitstream is the amount of motion in a portion of video. For example, increased motion may indicate more important or interesting events in multimedia content. Accordingly, motion information may be used to automatically edit the multimedia content based on segments of the video that satisfy a particular level of motion. For example, the editing module may be configured to mark portions of video content having motion levels over or under a particular threshold as being more desirable than other portions.

The editing software may also be configured to present the raw footage with portions of multimedia flagged as more or less interesting based on the multimedia editing information. As explained above, the presentation of the video segments may involve the display of a video thumbnail which may be configured to loop the more interesting portions of video content. By allowing the user to view portions of video that have been determined to be more important in the video thumbnail, the a user may more easily select (e.g. via drag and drop) portions of the raw footage to be included in the final produced multimedia presentation.

Thus, multimedia editing module 40 may, among other multimedia editing tasks, be configured to read in a multimedia editing information determined from multimedia analyzing module 38 and perform multimedia editing tasks based on this multimedia editing information.

Because it is desirable to complete multimedia editing tasks in as little time as possible, it is preferable not to wait an extended time for multimedia analyzing module 38 to analyze the multimedia bitstream to determine the multimedia editing information. Additionally, once the multimedia editing information has been determined, it is preferable not to reanalyze the multimedia bitstream if this information is needed again. Accordingly, multimedia editing information may be embedded in the multimedia bitstream, and subsequently extracted by multimedia editing module 41 (or other executable modules), such that complex analysis is not required, or is substantially reduced.

In addition to multimedia editing module 40, other executable modules such as, but not limited to, multimedia playback module 39 and multimedia processing module 41 may also use multimedia editing information to manipulate a multimedia bitstream. These modules may also be configured to embed multimedia editing information in, and/or extract multimedia editing information from, a multimedia bitstream.

In general, multimedia processing module 41 performs multimedia processing tasks such as compressing, filtering, or adjusting the color of video in a multimedia bitstream. Processing module 41 may, in part, manipulate the multimedia file based on multimedia editing information. For example, a user may wish to manipulate the multimedia bitstream by compressing the video and/or audio content of the multimedia bitstream. Multimedia processing module 41 may use multimedia editing information indicating scene changes in the video, or other audio and/or video characteristics, to assist in compressing the multimedia bitstream. For example, because increased compression may decrease the playback quality of video and audio content, it may be preferable to compress some scenes more than others. Similarly, because many compression algorithms compress portions of video having less motion or complexity with better playback quality, multimedia processing module 41 may be configured to compress portions of video having less motion or complexity more than portions of video having more motion or complexity.

As an additional example, multimedia playback module 39 may be used to play the video and/or audio content of a multimedia bitstream. Multimedia playback module 39 may use multimedia editing information extracted from the multimedia bitstream to manipulate the playback of the multimedia bitstream. For example, a playback module 39 may be configured to use the positions of scene changes, included in the multimedia editing information, to provide automatic chapters or skip-points.

Executable modules, such as multimedia playback module 39, multimedia editing module 40, and multimedia processing module 41, may also be configured to embed information obtained from analyzing the multimedia bitstream and/or information related to the editing or processing performed on the video and/or audio content. For example, multimedia processing module 41 may perform processing steps such as, but not limited to, compressing the multimedia bitstream, normalizing the volume of an audio bitstream, changing the contrast or brightness level of a video bitstream, changing the color saturation of a video bitstream, speeding up or slowing down the playback of the bitstream, enhancing video content, or blurring the video content. When performing processing tasks, multimedia processing module 41, or other executable modules, may perform analysis on the multimedia bitstream. The results of the multimedia processing analysis may be useful for multimedia editing in later analysis. For example, to determine the position of commercial content in a multimedia bitstream, motion analysis may be performed on the multimedia bitstream. The results of the motion analysis may also be embedded in the bitstream. Accordingly, the results of the motion detection analysis may be later extracted by multimedia analyzing module 38 in an effort to reduce the repeated analysis of the multimedia bitstream when determining multimedia editing information in a later analysis.

While FIG. 5 depicts DEMUX 110, MUX 116, decoding module 112, and encoding module 114 as separate modules, it should be understood that each of these modules may be incorporated within multimedia editing module 40. Additionally, as in the embodiments of FIGs. 3 and 4, multimedia stream 80 may be in a variety of multimedia formats and may undergo a variety of pre-processing steps which are not shown. For example, the multimedia stream may be captured in a first format and converted into another format, which may also involve compression of the video and/or audio data.

In some embodiments, a demultiplexer, DEMUX 110, separates hybrid multimedia stream 80 into individual elementary streams such as video stream 64, audio stream 66, private data stream 68, and formatted multimedia editing data stream 76. Multimedia editing data stream 76, which may include a plurality of multimedia editing data blocks 88, is passed through decoding module 112. Decoding module 112 is configured to decode the data stored within the multimedia editing data blocks 88, format the data, and pass the data to multimedia editing module 40, which may use the multimedia editing information within the data to edit the audio or video within video stream 64 and/or audio stream 66.

Multimedia editing module 40 may request and receive the multimedia editing information from multimedia analyzing module 38. In some embodiments, however, multimedia editing module 40 may be configured to directly check the multimedia bitstream for multimedia editing information which may have been embedded therein.

If multimedia editing information is not embedded within the multimedia bitstream, if the multimedia editing information needs to be updated, or if different multimedia editing information is needed by multimedia editing module 40, then multimedia analyzing module 38 may be configured to provide the appropriate multimedia editing information as described in the embodiments of FIG. 3.

Once the multimedia editing information is provided by multimedia analyzing module 38, or otherwise extracted from the multimedia bitstream, multimedia editing module 40 may then edit the multimedia content based on the multimedia editing information.

In the embodiment of FIG. 5, multimedia stream 80 is in the same format of multimedia stream 80 as output from MUX 78 from FIG. 4. Thus, exemplary multimedia stream 80 includes a plurality of alternating audio data blocks 82, video data blocks 84, private data blocks 86, as well as multimedia editing data blocks 88.

In practice, an executable module is used to decode multimedia editing data blocks 88 within formatted multimedia editing data stream 76. For example, decoding module 112 may read the Special ID Field 98 in Header Field 90 to determine whether the particular data block is, in fact, one containing multimedia editing information. If so, decoding module 112 looks to the Version Subfield 100 to determine whether the version of the multimedia editing data block 88 is known, and therefore able to decode the multimedia data stored within Data Field 96. If decoding module 112 determines that the multimedia data can be decoded, decoding module 112 inspects the contents of Address of Tag ID Subfield 104, Address of Data Length 106, and the Address of Data Subfield 108 to determine the starting address of the Tag ID Field 92, Data Length Field 94 and Data Field 96, respectively.

Decoding module 112 may then jump to the starting address of the Tag ID Field 92, and parse each of the tags and their associated values within Tag ID Field 92, thereby determining the associated tags for the editing information. In some instances, decoding module 112 may only be interested in a subset of the total information stored in Data Field 96, such as the "motion" and "zoom flag" information. In this example, the decoding module 112 may only parse the Tag ID Field 92 until the module determines that "tag 1" and "tag 4" correspond to the "motion" and "zoom flag" information, respectively.

Decoding module 112 may then jump to the starting address of the Length of Data Field 94. Decoding module 112 may read the contents of the Length of Data Field 94 to determine the length of the multimedia editing information data associated with each tag for which it seeks information. In this example, decoding module 112 determines the length of the multimedia editing information data associated with "tag 1" and "tag 4." For example, Length of Data Field 94 may contain data indicating that the data associated with "tag 1" has a length of 32 bytes, and the data associated with "tag 2" has a length of 64 bytes.

Decoding module 112 may then jump to the start of Data Field 96 and parse through the data contained therein until it finds either "tag 1" or "tag 4," which may indicate the start of the associated multimedia editing information.

Beginning with the tag and reading to an offset address determined from the length of editing information associated with the tag, decoding module 112 may read and temporarily store the associated multimedia editing information in memory. The executable module then continues parsing the Data Field 96 until finding the remainder of the tags by repeating the step of reading the multimedia editing information associated with each tag.

The resulting decoded multimedia editing data 72 is output from decoder 112 in a predetermined format. The multimedia editing information in the multimedia editing data 72 may then be passed into multimedia editing module 40 for use in manipulating the multimedia bitstream.

Multimedia analyzing module 38 may perform analysis of the multimedia bitstream that may be useful for a variety of multimedia manipulation tasks. Thus, although this analysis provides information representing characteristics of the multimedia bitstream useful for editing multimedia, the analysis may also be useful for other manipulation tasks. Accordingly, the information from the various analyses may also be saved and encoded back into multimedia stream 80 in a manner similar to that described in relation to FIGs. 3 and 4. This information useful for multimedia manipulation could be encoded into, for example, private data stream 68' or multimedia editing data stream 76', and embedded within hybrid multimedia stream 80'. The hybrid stream 80' may then be decoded and used by any subsequent executable module configured to extract the multimedia manipulation information from multimedia stream 80'. For example, multimedia playback or processing modules may find this analysis useful for playing or processing the multimedia bitstream.

Once multimedia editing information is embedded within a multimedia stream, the amount of reanalyzing of audio and/or video content to determine the multimedia editing information may be lessened or eliminated. By embedding the multimedia editing information within the bitstream, rather than storing it in a separate file for example, the multimedia editing information is not separated from the bitstream. Thus, even if the multimedia bitstream is passed to another computer for further manipulation, the information is available for extraction. By embedding the multimedia editing information in the bitstream itself, the reanalysis of the multimedia bitstream in subsequent multimedia manipulation steps may be dramatically reduced. For example, rather than reanalyzing the multimedia bitstream, results of previous analyses may be extracted from the bitstream.

FIG. 6 represents an exemplary flow diagram depicting a method for embedding multimedia editing information into a multimedia stream. At step 118, a multimedia file is provided, for example, by a multimedia acquisition module. The multimedia bitstream may be provided by acquiring the bitstream from mass storage 48, remote server 24, memory 34, or optical disc 30 (FIG. 1), for example. It should be understood that the systems and methods for embedding multimedia editing information in, and extracting multimedia editing information from, a multimedia bitstream, do not require the step of providing the bitstream.

Because multimedia files, such as DV files, may be excessively large, it is sometimes beneficial to compress the multimedia bitstream. Thus, at decision block 120, a determination is made as to whether compression of the multimedia information is needed. If compression is needed (the YES condition), the multimedia information is compressed (e.g. with a multimedia processing module), and possibly converted to a new format, using techniques well known to those skilled in the art in step 122. For example, a DV file may be compressed and converted to MPEG-2, or a bitstream already in MPEG-2 format may be further compressed.

The compression step 122 performs an analysis of the multimedia bitstream that may produce multimedia editing information. For example, analysis for multimedia compression may include performing motion estimation. In addition, if desired, analysis other than that needed for the multimedia compression may be performed during compression step 122. The resulting multimedia editing information from the analysis performed in compression step 122 (and/or information resulting from other analysis) may be embedded into the compressed multimedia stream.

Continuing with the flow diagram of FIG. 6, if compression is not performed (the NO condition), or after a bitstream has already been initially compressed in step 122, the multimedia content may be analyzed in step 124 to determine multimedia editing information.

At step 126 the multimedia editing information may be used to manipulate a multimedia bitstream by an executable module. For example, a multimedia processing, playback, or editing module may use multimedia editing information to manipulate the bitstream. At step 128, the multimedia editing information may be formatted into at least one data block. At step 130, the data representing the multimedia editing information is embedded into the multimedia stream, for example, by multiplexing the multimedia editing information with video, audio, and/or data. This stream of data is output in step 132 as a hybrid data stream containing both multimedia editing information and multimedia content, such as video and/or audio data.

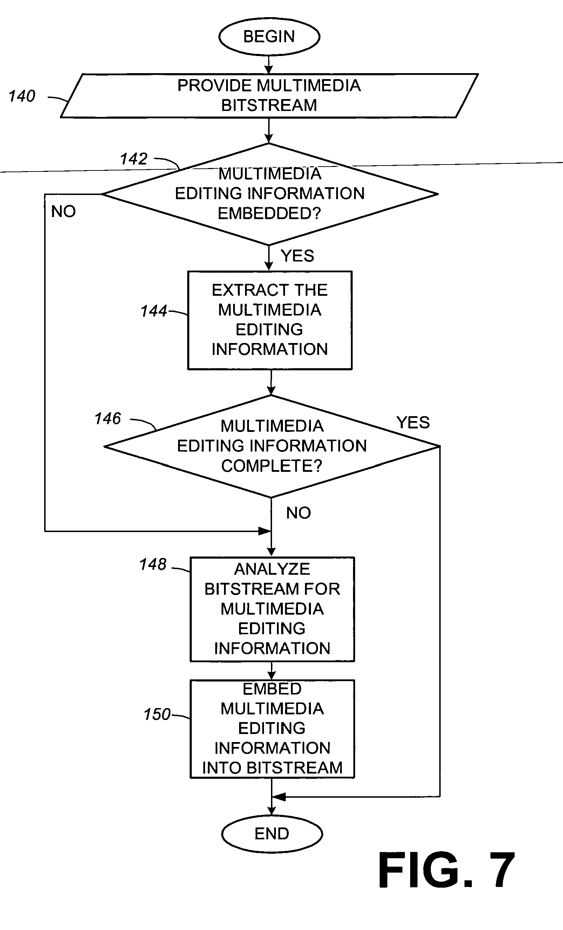

FIG. 7 depicts an exemplary flow diagram representing how a system employing multimedia editing module 40, or other executable modules, might use a hybrid multimedia stream having multimedia editing information embedded therein. At step 140, a multimedia stream is provided which may, or may not, be a hybrid multimedia stream containing multimedia editing information. The multimedia bitstream may be provided by acquiring the bitstream from mass storage 48, remote server 24, memory 34, or optical disc 30 (FIG. 1), for example. It should be understood that the systems and methods for embedding multimedia editing information in, and extracting multimedia editing information from, a multimedia bitstream, do not require the step of providing the bitstream.

At decision block 142, a determination is made as to whether any multimedia editing information is already embedded within the provided multimedia stream. This step may also include decompressing, decoding, and/or demultiplexing the multimedia stream.

On the condition that at least some multimedia editing information is embedded in the multimedia stream (the YES condition of decision block 142), the multimedia editing information is extracted in step 144 and a determination is made at decision block 146 whether the embedded multimedia editing information represents all the multimedia editing information that is needed by the multimedia editing module. This determination may be accomplished by merely analyzing the header information of the multimedia data blocks within the hybrid multimedia stream, or by analyzing the multimedia editing information itself.

If all the multimedia editing information that is needed for the multimedia editing module is embedded within the data stream (the YES condition of decision block 146), then the multimedia editing module may then extract and receive the multimedia editing information and use it to manipulate the multimedia bitstream. For example, multimedia editing module may, for example, automatically edit the multimedia bitstream or provide tools such as video thumbnails and scene split information for manually editing the multimedia bitstream using the multimedia editing information.

However, if the necessary multimedia editing information for the executable module is not embedded in the hybrid stream (the NO condition of block 146), the multimedia stream may be analyzed in step 148 to determine and acquire the additional multimedia editing information. For example, in some cases, a multimedia editing information in the multimedia bitstream may pertain to only a portion of the subject multimedia bitstream. Accordingly, some additional analysis of the portions not previously analyzed for multimedia editing information may need to be completed. The multimedia editing module may be configured to use both the multimedia editing information extracted from the hybrid stream and the multimedia editing information discovered from analyzing the multimedia stream in step 148 to manipulate the audio and/or video content.

In contrast to situations in which there is no useful multimedia editing information embedded in the multimedia stream, only the missing information may need to be determined in step 148. Therefore, step 148, which analyzes the multimedia content for multimedia editing information, is potentially less complicated and time consuming than if a full analysis, including all previously performed analysis, is performed.

If decision block 142 indicates that no multimedia editing information is embedded in the multimedia bitstream (the NO condition), the multimedia analyzing module analyzes the multimedia bitstream to determine the multimedia editing information. The multimedia editing module, or other executable modules, may then use the multimedia editing information for manipulating the multimedia content. At step 150, the multimedia editing information, and any information related to the multimedia bitstream analysis performed to detect the multimedia editing information, may be embedded into the multimedia bitstream. In addition to embedding multimedia editing information, if the multimedia bitstream was modified, by other editing or processing steps, for example, information related to how the multimedia bitstream was modified may be embedded into the multimedia bitstream.

Once the multimedia editing information is embedded within the multimedia stream, the information may be extracted and used by any executable module, such as, but not limited to, a multimedia playback module, multimedia processing module, or multimedia editing module configured to extract the information from the multimedia data stream.

Embodiments have been described which embed multimedia editing information into the multimedia bitstream by multiplexing a separate, user-defined data stream with multimedia bitstreams. However, some embodiments may embed the multimedia editing information in other ways, and the format of the hybrid stream, or the process used to embed the multimedia editing information to create the hybrid stream, is not limited to any one embodiment.

For example, in some embodiments, multimedia editing information may be directly embedded in the same bitstream as the video and/or audio information. For example, some multimedia formats, such as formats following the MPEG standard, incorporate user defined data, also known as user data, within the video and/or audio bitstreams. User data may contain any binary data and is not necessarily associated with the video or audio information. Accordingly, this user data may, at least in part, correspond to multimedia editing information. This user data, corresponding to multimedia editing information, may be embedded into the bitstream as defined by the particular multimedia format. Similarly, the multimedia editing information may be extracted and used for subsequent multimedia processing, editing, or analyzing.

Additionally, in some embodiments, multimedia editing information may be embedded within multimedia streams that do not specifically allow for embedding user defined data within the multimedia stream. For example, it is possible to add a pattern of bits to a multimedia bitstream without altering the perceivable audio and/or video content. These bits may contain any binary data and are not necessarily associated with the video or audio information. For example, these techniques are used when embedding digital watermarks to identify copyright information in multimedia bitstreams. Accordingly, similar techniques may be used to embed multimedia editing information within these multimedia streams. Just as digital watermarks, for example, can be detected within a bitstream, similar techniques may be used to extract multimedia editing information from the multimedia bitstream. This multimedia editing information may then be used for manipulating the multimedia bitstream by processing or editing, for example.

Accordingly, the above embodiments are merely examples of the many possible ways to embed multimedia editing information within a multimedia bitstream. Similarly, the above embodiments include mere examples of how to extract and use multimedia editing information embedded within a hybrid bitstream. Additionally, it should be emphasized that many variations and modifications may be made to the above-described embodiments. All such modifications and variations are intended to be included herein within the scope of this disclosure and protected by the following claims.

## Claims

1. A method for processing a multimedia bitstream comprising:
embedding multimedia editing information within a multimedia bitstream, the multimedia editing information signifying characteristics of a multimedia signal useful for editing multimedia content within the multimedia bitstream.

2. The method of claim 1, further including:
providing a multimedia bitstream.

3. The method of claim 1 or 2, further including:
determining the multimedia editing information using at least one of the following steps:
analyzing the multimedia bitstream to determine characteristics of the multimedia signal;
extracting the multimedia editing information from the bitstream; and
receiving the multimedia editing information.

4. The method of claim 3, further including:
formatting the multimedia editing information into at least one information data block;
wherein the step of embedding the multimedia editing information further includes embedding the at least one information data block into a plurality of multimedia data blocks to produce a hybrid multimedia data stream.

5. The method of claim 1, wherein the step of embedding the multimedia editing information includes at least one of the following:
embedding information representing characteristics of audio content in the multimedia bitstream;
embedding information representing characteristics of the video content in the multimedia bitstream; and
embedding information representing characteristics of the audio content of an auxiliary multimedia bitstream.

6. The method of claim 1, further including:
analyzing audio content in an auxiliary multimedia bitstream for characteristics of the audio content useful for editing the multimedia bitstream; and
embedding information representing the characteristics of the audio content in the auxiliary multimedia bitstream.

7. The method of claim 1, further including:
extracting the multimedia editing information from the multimedia bitstream; and
manipulating the multimedia bitstream based on the extracted multimedia editing information.

8. The method of claim 7, wherein the step of manipulating is performed by:
editing the multimedia bitstream based on the extracted multimedia editing information.

9. The method of claim 1, wherein the step of embedding the multimedia editing information within the multimedia bitstream includes any one of the following:
multiplexing bits representing the multimedia editing information with the content representing the multimedia signal;
embedding bits representing the multimedia editing information directly into the multimedia bitstream; or
embedding a pattern of bits representing the multimedia editing information into the multimedia bitstream without altering the perceivable multimedia content.

10. The method of claim 1, further including:
extracting information determined from a prior analysis of the multimedia bitstream from the multimedia bitstream; and
analyzing the extracted information to determine the multimedia editing information.

11. The method of claim 1, further including:
detecting if the multimedia bitstream contains embedded multimedia editing information.

12. The method of claim 11, further including:
identifying the multimedia editing information in the multimedia bitstream; and
determining if additional multimedia editing information is necessary to manipulate the multimedia bitstream, and wherein upon determining the additional multimedia editing information is necessary to manipulate the multimedia bitstream, acquiring the additional multimedia editing information.

13. The method of claim 12, wherein upon acquiring the additional multimedia editing information, embedding the additional multimedia editing information into the multimedia bitstream.

14. The method of claim 11, further including:
identifying the embedded multimedia editing information in the multimedia bitstream; and
determining if additional multimedia editing information is necessary to manipulate the multimedia bitstream;
wherein upon determining that the additional multimedia editing information is not necessary to manipulate the multimedia bitstream, extracting the embedded multimedia editing information.

15. The method of claim 11, wherein upon detecting that the multimedia bitstream does not contain the embedded multimedia editing information, determining the multimedia editing information;
wherein the step of embedding the multimedia editing information includes embedding the multimedia editing information resulting from determining the multimedia editing information.

16. The method of claim 11, wherein upon detecting that the multimedia bitstream does contain the embedded multimedia editing information, extracting the embedded multimedia editing information from the multimedia bitstream.

17. A system for processing a multimedia bitstream comprising:
an executable module for embedding multimedia editing information within a multimedia bitstream, the multimedia editing information signifying characteristics of a multimedia signal useful for editing multimedia content within the multimedia bitstream.

18. The system of claim 17, wherein the system further includes:
an executable module for determining the multimedia editing information, wherein the executable module determines the multimedia editing information by any one of the following:
analyzing the multimedia bitstream to determine characteristics of the multimedia signal;
extracting the multimedia editing information from the multimedia bitstream; and
receiving the multimedia editing information from a user.

19. The system of claim 17, further including:
an executable module for extracting the multimedia editing information from the multimedia bitstream; and
an executable module configured to use the extracted multimedia editing information to manipulate the multimedia bitstream.

20. The system of one of claims 17 to 19, further including:
a demultiplexer for separating a data stream having the multimedia editing information from a hybrid multimedia bitstream.

21. The system of one of claim 17 to 20, further including:
a multiplexer for combining a data stream having the multimedia editing information with the multimedia bitstream to form a hybrid multimedia bitstream.
